# EUROPÄISCHE PATENTANMELDUNG

(11) **EP 2 219 089 A1**
(43) Veröffentlichungstag der Anmeldung: **18.08.2010**
(21) Anmeldenummer: 09151843.1
(22) Anmeldetag: 02.02.2009
(51) Int. Cl.: G05B 19/042, G05B 19/05, G05B 9/02

(54) **Verfahren zum Betrieb eines Automatisierungssystems, korrespondierendes Computerprogramm und Automatisierungsgerät in einem Automatisierungssystem, das ein solches Computerprogramm ausführt**

(71) Anmelder: Siemens Aktiengesellschaft, 80333 München (DE)
(72) Erfinder: Weichhold, Peter, 90574 Rosstal (DE)

(57) **Zusammenfassung**

Es wird ein Verfahren zum Betrieb eines Automatisierungssystems (10) angegeben, bei dem bei einem Datenaustausch zwischen einer sicheren übergeordneten Einheit (12) und mindestens zwei sicheren untergeordneten Einheiten (16-20) die Daten in einem sicheren Kommunikationsrahmen (24) sukzessive an die von dem Datenaustausch betroffenen sicheren untergeordneten Einheiten (16-20) gesendet und von dort zurück an den ursprünglichen Sender, z.B. einen unsicheren Mittler (14), übertragen werden.

## Beschreibung

Die Erfindung betrifft ein Verfahren zum Betrieb eines Automatisierungssystems mit einer Mehrzahl kommunikativ verbundener Automatisierungsgeräte, ein korrespondierendes Computerprogramm und ein Automatisierungsgerät in einem Automatisierungssystem, das ein solches Computerprogramm ausführt.

Der Begriff "Automatisierungsgerät" umfasst sämtliche Geräte, Einrichtungen oder Systeme, also neben z.B. Steuerungen, wie speicherprogrammierbare Steuerungen, Prozessrechner, (Industrie-)Computer, dezentrale Peripheriegeräte, Sensoren oder Aktoren, Bedien- und Beobachtungsgeräte und dergleichen auch Antriebs- oder sonstige Aggregatsteuerungen, Frequenzumrichter und Ähnliches, wie sie zur Steuerung, Regelung und/oder Überwachung technologischer Prozesse z.B. zum Umformen oder Transportieren von Material, Energie oder Information etc. eingesetzt werden oder einsetzbar sind, wobei insbesondere über geeignete technische Einrichtungen Energie aufgewandt oder gewandelt wird.

Wie bereits in der DE 197 40 550 erwähnt ist, sind aus dem Siemens-Katalog ST 70, Ausgabe 1996, Kapitel 3, 4 und 8, als Automatisierungsgeräte eine speicherprogrammierbare Steuerung sowie ein Programmiergerät zum Erstellen eines Steuerungsprogramms für eine derartige speicherprogrammierbare Steuerung bekannt. Wesentliche Bestandteile dieser speicherprogrammierbaren Steuerung sind Baugruppen für zentrale Aufgaben (CPU-Einheiten) sowie Signal-, Funktions- und Kommunikationsbaugruppen. Die CPU-Einheit der speicherprogrammierbaren Steuerung arbeitet während des Steuerbetriebs zyklisch ein Steuerungsprogramm ab, welches ein Programmierer mit einem mit einem Software-Werkzeug versehenen Programmiergerät erstellt und welches zur Lösung einer Automatisierungsaufgabe vorgesehen ist. Während der zyklischen Bearbeitung liest die CPU-Einheit zunächst die Signalzustände an allen physikalischen Prozesseingängen ab und bildet ein Prozessabbild der Eingänge. Das Steuerungsprogramm wird unter Einbeziehung interner Zähler, Merker und Zeiten schrittweise abgearbeitet, und schließlich hinterlegt die CPU-Einheit die errechneten Signalzustände im Prozessabbild der Prozessausgänge, von welchem diese Signalzustände zu den physikalischen Prozessausgängen gelangen.

Gemäß dieser Terminologie betrifft die Erfindung ein Verfahren zum Betrieb eines Automatisierungssystems mit einer Mehrzahl kommunikativ verbundener Automatisierungsgeräte, von denen eines, z.B. in Form einer speicherprogrammierbaren Steuerung, als übergeordnete Einheit und mindestens zwei als untergeordnete Einheiten fungieren, wobei bei einem Datenaustausch zwischen einer sicheren übergeordneten Einheit und einer Mehrzahl von sicheren untergeordneten Einheiten zur Übermittlung der Daten ein sicherer Kommunikationsrahmen verwendet wird.

Die Bedeutung des Attributs "sicher", so wie hier und im Folgenden verwendet, richtet sich nach der Definition der DIN EN ISO 13849-1, die sich mit der Sicherheit von Maschinen und sicherheitsbezogenen Teilen von Steuerungen befasst. Ansonsten haben sich in der Fachwelt für das Attribut "sicher" in der hier verwendeten Bedeutung auch Ausdrücke wie "sicherheitsgerichtet", "fehlersicher" und dergleichen durchgesetzt.

Bei dem Verfahren zum Betrieb des Automatisierungssystems bezieht sich die Erfindung auf einen Datenaustausch zwischen sicheren Automatisierungsgeräten und zwar zwischen mindestens einer sicheren übergeordneten Einheit und mehreren sicheren untergeordneten Einheiten. Zum Schutz des Datenaustausches zwischen sicheren Automatisierungsgeräten ist eine Überprüfung der übertragenen Daten gegen Verfälschung vorgesehen und eine Möglichkeit für eine solche Überprüfung oder Erkennung eventueller Verfälschungen besteht in der Berechnung einer Prüfsumme, z.B. als CRC (cyclic-redundancy-code), über die übertragenen Daten.

Nachteilig bei diesem bekannten Betriebsverfahren für Automatisierungssysteme ist, dass bei einer Kommunikation mit z.B. sicherheitsgerichteten Sensoren oder Aktoren als untergeordnete Einheiten für jeden sicheren Kommunikationspfad eine Sicherheitsinstanz benötigt wird. Bei großen Automatisierungssystemen mit z.B. vielen sicheren Ein- und Ausgängen sind dafür viele dieser Sicherheitsinstanzen erforderlich. Die Bearbeitung dieser Instanzen, also z.B. die Berechnung von Prüfsummen, um Verfälschungen übertragener Daten erkennen zu können, belastet das jeweilige Automatisierungsgerät oft erheblich. Zur Lösung dieses Problems wurde die Verwendung von so genannten sicheren Links vorgeschlagen. Diese Links fassen mehrere sichere untergeordnete Einheiten, also z. B. Sensoren und Aktoren, für die übergeordnete Einheit zu einer sicheren Instanz zusammen. Wegen der durch die Zusammenfassung bewirkten Konzentration wird dieser Ansatz auch als Konzentratorlösung bezeichnet.

Nachdem Geräte, die im Betrieb die Funktion solcher sicherer Links übernehmen können, nach besonderen Sicherheitsrichtlinien zu entwickeln sind, sind sie ein zusätzlicher Kostenfaktor für das Automatisierungssystem insgesamt und damit für die zu automatisierende Anlage.

Eine Aufgabe der Erfindung besteht entsprechend darin, ein Verfahren zum Betrieb eines Automatisierungssystems der eingangs genannten Art vorzuschlagen, bei dem sichere über- und untergeordnete Einheiten unter Verwendung eines sicheren Kommunikationsrahmens Daten austauschen können, ohne dass dafür zusätzliche Hardware nach Art eines sicheren Links benötigt wird.

Diese Aufgabe wird erfindungsgemäß mit den Merkmalen des Anspruchs 1 gelöst. Dazu ist bei einem Verfahren zum Betrieb eines Automatisierungssystems mit einer Mehrzahl kommunikativ verbundener Automatisierungsgeräte, von denen eines als übergeordnete Einheit und mindestens zwei als untergeordnete Einheiten fungieren, wobei bei einem Datenaustausch zwischen einer sicheren übergeordneten Einheit und einer Mehrzahl von sicheren untergeordneten Einheiten zur Übermittlung der Daten ein sicherer Kommunikationsrahmen verwendet wird, Folgendes vorgesehen: Die Daten werden in dem sicheren Kommunikationsrahmen zunächst an eine erste von dem Datenaustausch betroffene sichere untergeordnete Einheit übermittelt. Diese entnimmt dem sicheren Kommunikationsrahmen eventuelle für sie bestimmte Daten und/oder trägt eventuelle erzeugte oder veränderte Daten ein. Die Daten werden in dem sicheren Kommunikationsrahmen sodann zurück an den ursprünglichen Sender und von dort an die nächste von dem Datenaustausch betroffene, sichere untergeordnete Einheit übertragen. Diese entnimmt ebenfalls Daten und/oder trägt neue oder veränderte Daten ein, woraufhin der sichere Kommunikationsrahmen erneut zurück an den ursprünglichen Sender übermittelt wird. Dies wird so lange fortgesetzt bis sämtliche von dem Datenaustausch betroffenen sicheren untergeordneten Einheiten erfasst sind.

Der Vorteil der Erfindung besteht darin, dass die von dem Datenaustausch betroffenen Daten durch die sichere übergeordnete Einheit in einem sicheren Kommunikationsrahmen versandt werden, mithin also ein erster Abschnitt der Datenübermittlung ausreichend abgesichert ist und dass jede sichere untergeordnete Einheit, die von dem Datenaustausch betroffen ist, die Daten in dem sicheren Kommunikationsrahmen empfängt und eventuelle Verfälschungen und dergleichen erkennen kann. Jede sichere untergeordnete Einheit, die an andere Automatisierungsgeräte, also andere untergeordnete Einheiten oder eine übergeordnete Einheit, Daten zu übermitteln hat, trägt diese in den erhaltenen sicheren Kommunikationsrahmen ein, so dass einerseits die eingetragenen oder veränderten Daten nicht als unzulässige Modifikation ausgewertet und eventuelle nachfolgende Fehler dennoch als solche erkannt werden. Die Daten werden jedoch nicht unmittelbar an die sichere übergeordnete Einheit zurück übermittelt, sondern zunächst sukzessive an jede sichere untergeordnete Einheit, die vom Datenaustausch betroffen ist. In dem sicheren Kommunikationsrahmen befinden sich also zunächst - bei der Übermittlung an die erste sichere untergeordnete Einheit - Daten für einzelne untergeordnete Einheiten. Nachfolgend werden in den sicheren Kommunikationsrahmen, wenn dieser sukzessive von einer sicheren untergeordneten Einheit zur nächsten sicheren untergeordneten Einheit weitergeleitet wird, bis sämtliche von dem Datenaustausch betroffene sichere untergeordnete Einheiten erfasst sind, sukzessive Daten eingetragen, die jeweils von den einzelnen sicheren untergeordneten Einheiten für andere sichere untergeordnete Einheiten oder die übergeordnete Einheit bestimmt sind. Mehrere sichere untergeordnete Einheiten bilden also zusammen eine sichere Instanz, indem sie gemeinsam einen sicheren Kommunikationsrahmen nutzen. Die Verwendung eines separaten Gerätes mit der Funktionalität eines sicheren Links, also der Rückgriff auf die Konzentratorlösung, wird damit entbehrlich.

Jede sichere untergeordnete Einheit verfügt über Funktionalität zur Einhaltung der Vorgaben beim Umgang mit einem sicheren Kommunikationsrahmen und über Funktionalität zum sicheren Entnehmen und Einstellen von Daten in diesem sicheren Kommunikationsrahmen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist in dem oben skizzierten und nachfolgend weiter erläuterten Verfahren zum Betrieb eines Automatisierungssystems die Verwendung eines zur Unterscheidung im Folgenden als unsicherer Mittler bezeichneten Automatisierungsgerätes vorgesehen. Gemäß dieser Ausgestaltung übermittelt die sichere übergeordnete Einheit den sicheren Kommunikationsrahmen an den unsicheren Mittler, wobei der unsichere Mittler die weitere Übermittlung des sicheren Kommunikationsrahmens an jede von dem Datenaustausch betroffene, sichere untergeordnete Einheit übernimmt. Seitens der sicheren untergeordneten Einheit erfolgt nach Empfang des sicheren Kommunikationsrahmens und nach Eintragung veränderter oder erzeugter Daten eine Rückübermittlung an den unsicheren Mittler. Der unsichere Mittler tritt also in den einzelnen Kommunikationsbeziehungen als ursprünglichen Sender auf. Der Datenaustausch wird, wenn sämtliche betroffenen, sicheren untergeordneten Einheiten erfasst sind, abgeschlossen, indem die Daten durch den unsicheren Mittler in dem sicheren Kommunikationsrahmen an die sichere übergeordnete Einheit übermittelt werden.

Der unsichere Mittler entlastet die von dem Datenaustausch betroffenen Automatisierungsgeräte von allgemeinen Kommunikationsaufgaben. Für die übergeordnete Einheit sind also z.B. nicht mehrere Übertragungen an jede sichere untergeordnete Einheit, sondern nur eine Übertragung an den unsicheren Mittler erforderlich.

Bevorzugt ist vorgesehen, dass der unsichere Mittler über Information über kommunikativ erreichbare sichere untergeordnete Einheiten verfügt und bei Erhalt von Daten in einem sicheren Kommunikationsrahmen von der sicheren übergeordneten Einheit die Daten in dem sicheren Kommunikationsrahmen sukzessive an jede durch die Information identifizierte, sichere untergeordnete Einheit übermittelt. Mit dieser Information kann der unsichere Mittler auch die sicheren untergeordneten Einheiten von Kommunikationsaufgaben entlasten, derart, dass für keine sichere untergeordnete Einheit Informationen über eventuelle benachbarte untergeordnete Einheiten vorgehalten werden müssen. Für jede untergeordnete Einheit stellt sich der Datenaustausch als ein Datenaustausch zwischen der über- und untergeordneten Einheit selbst dar. In diesem Datenaustausch fungiert der unsichere Mittler lediglich als Zwischenstation, so dass die untergeordnete Einheit die Daten in dem sicheren Kommunikationsrahmen nicht direkt an die sichere übergeordnete Einheit, sondern zunächst an den unsicheren Mittler, also den ursprünglichen Sender des sicheren Kommunikationsrahmens, überträgt. Nur der unsichere Mittler "weiß", ob und wenn ja, welche weiteren sicheren untergeordneten Einheiten von dem Datenaustausch betroffen sind und leitet in einem solchen Fall den erhaltenen sicheren Kommunikationsrahmen sukzessive an jede weitere sichere untergeordnete Einheit weiter, bis alle von dem Datenaustausch betroffenen sicheren untergeordneten Einheiten erfasst sind.

Bevorzugt ist vorgesehen, dass durch den unsicheren Mittler als kommunikativ erreichbare sichere untergeordnete Einheiten sämtliche direkt angeschlossene, sichere untergeordnete Einheiten erkannt werden. Diese Information kann für jeden unsicheren Mittler in einem Automatisierungssystem z.B. beim Start des Automatisierungssystems, also z.B. während eines so genannten Identifikationslaufs, ermittelt werden.

Bei den oder zumindest einzelnen sicheren untergeordneten Einheiten handelt es sich bevorzugt um Sensoren oder Aktoren, die in einem zu steuernden und/oder zu überwachenden technischen Prozess angeordnet sind. Bei der sicheren übergeordneten Einheit handelt es sich bevorzugt um ein Automatisierungsgerät, das zur Ausführung eines Steuerungsprogramms vorgesehen ist, mit dem die jeweilige Automatisierungslösung für den technischen Prozess implementiert oder teilweise implementiert ist. Die Unterscheidung zwischen über- und untergeordneter sicherer Einheit richtet sich dann im Wesentlichen nach dem Umfang der Verarbeitungsfunktionalität des jeweiligen Automatisierungsgerätes. Bei Aktoren oder Sensoren als untergeordnete Einheiten gibt es normalerweise keine oder kaum durch einen Benutzer beeinflussbare Funktionalität, die sich im Wesentlichen darauf beschränkt, dass z.B. ein Sensor ein oder mehrere Sensordaten liefert, die ggf. gefiltert, gewandelt oder einer sonst geeigneten Vorverarbeitung unterzogen werden, ohne dass dies in größerem Umfang als Bestandteil der Automatisierungslösung beeinflusst wird. Dies ganz im Gegenteil zur Funktionalität der jeweiligen sicheren übergeordneten Einheit, die eine Verarbeitungsfunktionalität nach Art eines Prozessors umfasst und bei der in einem Speicher ein Steuerungsprogramm vorgehalten wird, das die Automatisierungslösung oder einen Teil der Automatisierungslösung darstellt. Bei einem Datenaustausch zwischen einer solchen sicheren übergeordneten Einheit und Sensoren und Aktoren als sichere untergeordnete Einheiten übermittelt also z.B. die sichere übergeordnete Einheit in dem sicheren Kommunikationsrahmen ein Prozessabbild der Ausgänge an die sicheren untergeordneten Einheiten. Dadurch wird bei den Aktoren ein durch das Prozessabbild der Ausgänge kodierter Zustand eingeprägt und es werden z.B. Motoren ein- oder ausgeschaltet, Ventile geöffnet oder geschlossen werden usw. Daten, welche durch die sicheren untergeordneten Einheiten sukzessive in den auf diese Weise erhaltenen sicheren Kommunikationsrahmen eingetragen werden stellen bei Übermittlung zurück an die sichere übergeordnete Einheit das Prozessabbild der Eingänge dar, also eine Zusammenfassung der im Prozess aufgenommenen Zustandsinformationen. Durch die permanente Übermittlung der betroffenen Daten in einem sicheren Kommunikationsrahmen ist ein unverfälschter oder unverfälschbarer Datenaustausch gewährleistet und eventuell vorkommende Fehler werden zuverlässig erkannt, so dass aufgrund eines z.B. fehlerhaft verfälschten Prozesszustands keine unerwünschten Einflüsse auf den Prozess möglich sind, derart, dass z.B. ein Aggregat nicht abgeschaltet wird, obwohl dessen Abschaltung nach dem Steuerungsprogramm und dem Prozesszustand erforderlich ist.

Das Verfahren wie hier skizziert und nachfolgend weiter beschrieben ist bevorzugt in Software ausgeführt, so dass sich die Erfindung insoweit auch auf ein Computerprogramm mit durch einen Computer ausführbaren Programmcodeanweisungen zur Ausführung des Verfahrens und einen Datenträger mit einem solchen Computerprogramm bezieht. Weiter bezieht sich die Erfindung auch auf ein Computersystem, insbesondere ein Automatisierungsgerät, auf dem ein derartiges Computerprogramm geladen ist. Bei dem Computersystem handelt es sich z.B. um ein in einem Automatisierungssystem wie hier beschrieben als sichere übergeordnete Einheit fungierendes Automatisierungsgerät oder um ein in einem Automatisierungssystem als unsicherer Mittler fungierendes Automatisierungsgerät. Entweder fungiert die übergeordnete Einheit für die angeschlossenen untergeordneten Einheiten direkt als ursprünglicher Sender oder der unsichere Mittler tritt für die sicheren untergeordneten Einheiten an diese Stelle. Das Gerät, das im tatsächlichen Datenaustausch für die sicheren untergeordneten Einheiten als ursprünglicher Sender auftritt, umfasst eine Softwareimplementation der wesentlichen Schritte des hier beschriebenen Verfahrens, also zum Erkennen der von dem Datenaustausch betroffenen sicheren untergeordneten Einheiten, zum Senden des sicheren Kommunikationsrahmen an eine erste von dem Datenaustausch betroffene, sichere untergeordnete Einheit zum Empfangen des sicheren Kommunikationsrahmens von dieser ersten sicheren untergeordneten Einheit und zum sukzessiven Weiterleiten an alle weiteren von dem Datenaustausch betroffenen sicheren untergeordneten Einheiten und - im Falle des unsicheren Mittlers - zum abschließenden Übertragen des sicheren Kommunikationsrahmens an die sichere übergeordnete Einheit.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z.B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

### Es zeigen

- FIG 1: ein schematisch vereinfacht dargestelltes Automatisierungssystem mit kommunikativ verbundenen Automatisierungsgeräten und
- FIG 2: eine schematisch vereinfachte Darstellung eines sicheren Kommunikationsrahmens, wie er beim Datenaustausch zwischen sicheren Automatisierungsgeräten verwendet wird.

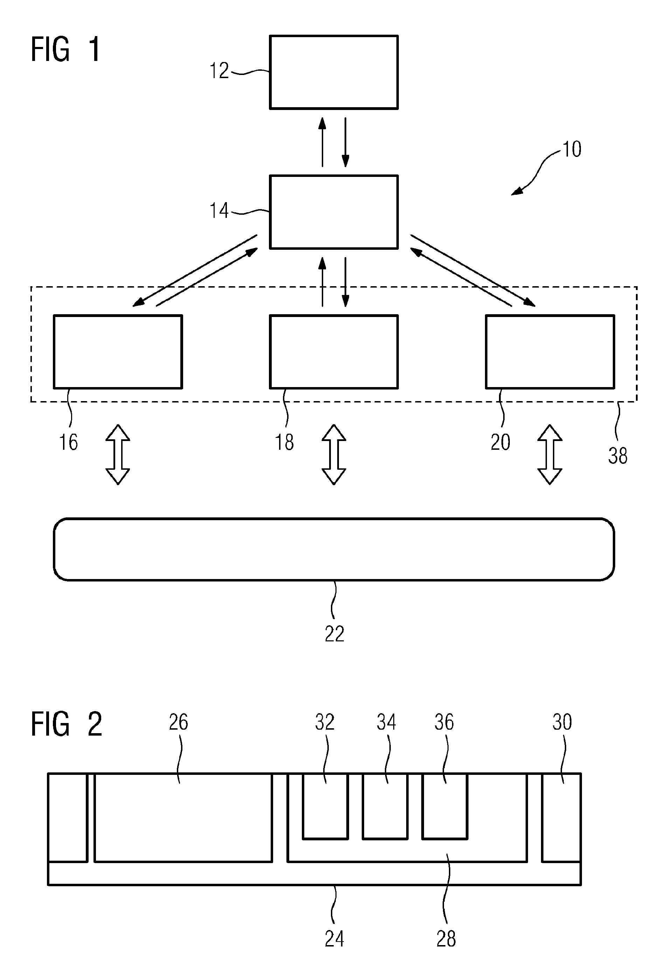

FIG 1 zeigt ein schematisch vereinfacht dargestelltes Automatisierungssystem 10 mit einer Anzahl kommunikativ verbundener Automatisierungsgeräte 12,14,16,18,20. Das Automatisierungssystem 10 ist zur Steuerung und/oder Überwachung eines nicht näher dargestellten technischen Prozesses 22 vorgesehen. Die kommunikative Verbindung der von dem Automatisierungssystem 10 umfassten Automatisierungsgeräte 12-20 erfolgt in an sich bekannter Art auf leitungsgebundenem oder leitungslosem Weg und ein über das jeweilige Kommunikationsmedium erfolgender Datenaustausch wird protokollgebunden abgewickelt, wobei als zugrunde liegendes Protokoll z.B. das unter der Bezeichnung PROFIsafe bekannte Protokoll verwendbar ist und wobei die zwischen den Automatisierungsgeräten 12-20 bestehenden, nicht separat dargestellten Kommunikationsverbindungen dann PROFIBUS-Verbindungen sind.

Die vorliegende Erfindung befasst sich mit einem sicheren Datenaustausch zwischen den einzelnen Automatisierungsgeräten 12-20 des Automatisierungssystems 10. Die Definition des Ausdrucks "sicher" folgt dabei der Definition in der DIN EN ISO 13849. Ein in diesem Sinne sicherer Datenaustausch kann nur zwischen in gleichem Sinne sicheren Automatisierungsgeräten 12-20 erfolgen, so dass in dem in FIG 1 dargestellten Automatisierungssystem 10 zumindest ein im Folgenden als übergeordnete Einheit bezeichnetes Automatisierungsgerät 12 als sichere übergeordnete Einheit 12 ausgeführt ist und indem zumindest zwei im Folgenden als untergeordnete Einheiten bezeichnete Automatisierungsgeräte 16-20 als sichere untergeordnete Einheiten 16-20 ausgeführt sind.

Eine sichere Kommunikation zwischen sicheren Automatisierungsgeräten 12-20, z.B. zwischen einer sicheren übergeordneten Einheit 12 und einer oder mehreren sicheren untergeordneten Einheiten 16-20 basiert auf der Verwendung eines sicheren Kommunikationsrahmens 24, wie er schematisch vereinfacht in FIG 2 dargestellt ist. Der sichere Kommunikationsrahmen 24 stellt eine Zusammenfassung von Nutzdaten in einem Telegramm oder in einer Folge von Telegrammen dar, die zur Datenübertragung zwischen den einzelnen Automatisierungsgeräten 12-20 eines Automatisierungssystems 10 ausgetauscht werden.

Im Szenario, an dem die Erfindung erläutert werden soll, soll davon ausgegangen werden, dass es sich bei der sicheren übergeordneten Einheit 12 um eine Steuerung, nach Art z.B. einer speicherprogrammierbaren Steuerung, handelt, die ein Steuerungsprogramm abarbeitet, das eine Automatisierungslösung für den technischen Prozess 22 darstellt. Die Interaktion zwischen der sicheren übergeordneten Einheit 12 als Steuerung und dem technischen Prozess 22 erfolgt über die sicheren untergeordneten Einheiten 16-20, z.B. wenn es sich bei diesen um Sensoren und Aktoren handelt. Zur Beeinflussung des technischen Prozesses 22 generiert die Steuerung aufgrund des Steuerungsprogramms in an sich bekannter Art ein so genanntes Prozessabbild der Ausgänge 26. Das Prozessabbild der Ausgänge 26 kodiert für jeweils einen Bearbeitungszyklus errechnete oder ermittelte Prozesszustände, die dem Prozess 22 durch Ansteuerung entsprechender Aktoren, z.B. Motoren, Ventile usw., eingeprägt werden. Für die Ermittlung des Prozessabbildes der Ausgänge 26 benötigt die Steuerung Zustandsinformationen aus dem Prozess 22, die im so genannten Prozessabbild der Eingänge 28 zusammengefasst sind und die sich aufgrund von im Prozess 22 aufgenommener Sensordaten ergeben. Das Prozessabbild der Eingänge 28 repräsentiert damit die Gesamtheit der im Prozess betätigten Bedienelemente, im Prozess gemessenen Temperaturen, gefahrene Geschwindigkeiten, usw.

Bei einem Datenaustausch von der sicheren übergeordneten Einheit 12 an zumindest zwei sichere untergeordnete Einheiten 16-20 wird also ein Kommunikationsrahmen 24 wie in FIG 2 dargestellt verwendet, der zumindest Daten für das Prozessabbild der Ausgänge 26 und Daten für das Prozessabbild der Eingänge 28 umfasst. Der sichere Kommunikationsrahmen 24 unterscheidet sich von einem normalen Kommunikationsrahmen durch zusätzliche Prüfdaten 30, wobei z.B. über die Gesamtheit der von dem sicheren Kommunikationsrahmen 24 umfassten Daten eine Prüfsumme gebildet und als Prüfdatum 30 mitgeführt wird, so dass jeder Empfänger des sicheren Kommunikationsrahmens 24 durch Bildung einer Prüfsumme nach dem gleichen Bildungsschema und Vergleich der lokal ermittelten Prüfsumme mit dem erhaltenen Prüfdatum 30 feststellen kann, ob die Daten des sicheren Kommunikationsrahmens 24 unverfälscht empfangen wurden.

Die Erfindung basiert nun darauf, dass die sichere übergeordnete Einheit 12 den jeweiligen sicheren Kommunikationsrahmen 24 zunächst an eine erste von dem Datenaustausch betroffene sichere untergeordnete Einheit 16 übermittelt. Diese entnimmt dem sicheren Kommunikationsrahmen 24 eventuell für sie bestimmte Daten. Eine solche Datenentnahme wird sich zunächst auf das Prozessabbild der Ausgänge 26 beziehen, wenn es sich bei der ersten sicheren untergeordneten Einheit 16 um einen Aktor handelt oder diese einen Aktor ansteuert und dafür dann selbstverständlich Momentandaten des Prozessabbildes der Ausgänge 26 zu verwenden sind. Die erste sichere untergeordnete Einheit 16 trägt in den erhaltenen sicheren Kommunikationsrahmen 24 eventuelle erzeugte oder veränderte Daten ein, wobei in der Darstellung in FIG 2 dafür zur Illustration innerhalb des Prozessabbildes der Eingänge 28 ein erstes, zweites und drittes Datenpaket 32,34,36 dargestellt sind und wobei eventuelle erzeugte oder veränderte Daten der ersten sicheren untergeordneten Einheit 16 in das Prozessabbild der Eingänge 28 als erstes Datenpaket 32 eingetragen werden. Bei einer Veränderung der von dem sicheren Kommunikationsrahmen 24 umfassten Daten bildet die erste sichere untergeordnete Einheit 16 das Prüfdatum 30 neu und übermittelt den sicheren Kommunikationsrahmen 24 zurück an den ursprünglichen Sender.

Als ursprünglicher Sender kommt entweder die sichere übergeordnete Einheit 12 selbst oder ein zwischengeschaltetes Automatisierungsgerät 14, das in dem Kommunikationsszenario als unsicherer Mittler 14 fungiert, in Betracht. Der Vorteil der Verwendung eines unsicheren Mittlers 14 besteht darin, dass die ansonsten an dem Kommunikationsvorgang beteiligten Automatisierungsgeräte 12;16-20 von Kommunikationsaufgaben entlastet sind. Bei der Darstellung in FIG 1 wird davon ausgegangen, dass durch jede sichere untergeordnete Einheit 16-20 die Übermittlung des sicheren Kommunikationsrahmens 24 zurück an den unsicheren Mittler 14 als ursprünglicher Sender erfolgt.

Nachdem auf diese Weise die erste sichere untergeordnete Einheit 16 die mit der Datenübertragung für sie bestimmten Daten erhalten und erzeugte und veränderte Daten weitergegeben hat, erfolgt eine Weiterleitung des sicheren Kommunikationsrahmens 24 an die nächste von dem Datenaustausch betroffene sichere untergeordnete Einheit 18,20. Auch diese entnimmt die in dem so erhaltenen sicheren Kommunikationsrahmen 24 enthaltenen und für sie bestimmten Daten und trägt erzeugte oder veränderte Daten in den sicheren Kommunikationsrahmen 24, hier als zweites oder drittes Datenpaket 36, 26, in das Prozessabbild der Eingänge 28 ein. Jede auf diese Weise erreichte, sichere untergeordnete Einheit 18,20 sendet den sicheren Kommunikationsrahmen 24 an den ursprünglichen Sender, hier also den unsicheren Mittler 14, zurück und dieser übermittelt abschließend den sicheren Kommunikationsrahmen 24 mit den zuletzt gültigen Daten an die sichere übergeordnete Einheit 12.

Die an den unsicheren Mittler 14 direkt oder indirekt angeschlossenen sicheren untergeordneten Einheiten 16-20 verwenden also einen sicheren Kommunikationsrahmen 24 und es erfolgt jeweils unter Zwischenschaltung des unsicheren Mittlers 14 eine sukzessive Weiterleitung an die nächste, sichere untergeordnete Einheit 18,20, so lange, bis alle sicheren untergeordneten Einheiten 16-20 erreicht sind. Die sicheren untergeordneten Einheiten 16-20 sind auf diese Weise zu einer Sicherheitsgruppe 38 zusammengefasst.

Der Vorteil der Erfindung besteht darin, dass auf dem Kommunikationspfad zwischen sicherer übergeordneter Einheit 12 und jeder sicheren untergeordneten Einheit 16-20 auch Geräte verwendbar sind, die nicht als "sichere" Geräte gemäß der oben erwähnten Definition ausgeführt sind. Das Automatisierungssystem 10 kann damit ohne Beeinträchtigung der Datensicherheit preisgünstiger ausgeführt werden, weil eine Ausführung sämtlicher Automatisierungsgeräte 12-20 als sichere Einheiten kostenintensiv ist.

Damit lässt sich die Erfindung kurz wie folgt darstellen: Es wird ein Verfahren zum Betrieb eines Automatisierungssystems 10 angegeben, bei dem bei einem Datenaustausch zwischen einer sicheren übergeordneten Einheit 12 und mindestens zwei sicheren untergeordneten Einheiten 16-20 die Daten in einem sicheren Kommunikationsrahmen 24 sukzessive an die von dem Datenaustausch betroffenen sicheren untergeordneten Einheiten 16-20 gesendet und von dort zurück an den ursprünglichen Sender, z.B. einen unsicheren Mittler 14, übertragen werden.

## Patentansprüche

1. Verfahren zum Betrieb eines Automatisierungssystems (10) mit einer Mehrzahl kommunikativ verbundener Automatisierungsgeräte (12,14,16,18,20),
von denen eines als übergeordnete Einheit und mindestens zwei als untergeordnete Einheiten fungieren,
wobei bei einem Datenaustausch zwischen einer sicheren übergeordneten Einheit (12) und einer Mehrzahl von sicheren untergeordneten Einheiten (16,18,20) zur Übermittlung der Daten ein sicherer Kommunikationsrahmen (24) verwendet wird,
**dadurch gekennzeichnet, dass**
die Daten in dem sicheren Kommunikationsrahmen (24) zunächst an eine erste von dem Datenaustausch betroffene, sichere untergeordnete Einheit (16-20) übermittelt werden, welche dem Kommunikationsrahmen (24) eventuelle für sie bestimmte Daten entnimmt und/oder eventuelle erzeugte oder veränderte Daten einträgt,
die Daten in dem sicheren Kommunikationsrahmen (24) zurück an den ursprünglichen Sender und von dort an die nächste von dem Datenaustausch betroffene, sichere untergeordnete Einheit (16-20), welche ebenfalls Daten entnimmt und/oder einträgt, und
in dem sicheren Kommunikationsrahmen (24) zurück an den ursprünglichen Sender übermittelt werden bis sämtliche von dem Datenaustausch betroffene, sichere untergeordnete Einheiten (16-20) erfasst sind.

2. Verfahren nach Anspruch 1, wobei die sichere übergeordnete Einheit (12) den sicheren Kommunikationsrahmen (24) an ein als unsicherer Mittler (14) fungierendes Automatisierungsgerät (12-20) übermittelt,
wobei der unsichere Mittler (14) den sicheren Kommunikationsrahmen (24) sukzessive an jede von dem Datenaustausch betroffene, sichere untergeordnete Einheit (16-20) übermittelt,
wobei jede von dem Datenaustausch betroffene, sichere untergeordnete Einheit (16-20) den sicheren Kommunikationsrahmen (24) an den unsicheren Mittler (14) als ursprünglichen Sender übermittelt und
wobei der Datenaustausch abgeschlossen wird, indem die Daten in dem sicheren Kommunikationsrahmen (24) an die sichere übergeordnete Einheit (12) übermittelt werden.

3. Verfahren nach Anspruch 2, wobei der unsichere Mittler (14) über Information über kommunikativ erreichbare sichere untergeordnete Einheiten (16-20) verfügt und bei Erhalt von Daten in einem sicheren Kommunikationsrahmen (24) von der sicheren übergeordneten Einheit (12) die Daten in dem sicheren Kommunikationsrahmen (24) sukzessive an jede durch die Information identifizierte, sichere untergeordnete Einheit (16-20) übermittelt.

4. Verfahren nach Anspruch 3, wobei als kommunikativ erreichbare sichere untergeordnete Einheiten (16-20) sämtliche an den unsicheren Mittler (14) direkt angeschlossene sichere untergeordnete Einheiten (16-20) erkannt werden.

5. Verfahren nach einem der vorangehenden Ansprüche, mit in einem zu steuernden und/oder zu überwachenden technischen Prozess (22) befindlichen Sensoren oder Aktoren als sichere untergeordnete Einheiten (16-20).

6. Verfahren nach Anspruch 5, mit einem ein Steuerungsprogramm ausführenden Automatisierungsgerät (12-20) als sichere übergeordnete Einheit (12).

7. Computerprogramm mit durch einen Computer ausführbaren Programmcodeanweisungen zur Implementierung des Verfahrens nach einem der Ansprüche 1 bis 6 wenn das Computerprogramm auf einem Computer ausgeführt wird.

8. Speichermedium mit einem durch einen Computer ausführbaren Computerprogramm gemäß Anspruch 7.

9. Computersystem, insbesondere in einem Automatisierungssystem als sichere übergeordnete Einheit (12) fungierendes Automatisierungsgerät, auf dem ein Computerprogramm nach Anspruch 7 geladen ist.

10. Computersystem, insbesondere in einem Automatisierungssystem als unsicherer Mittler (14) fungierendes Automatisierungsgerät, auf dem ein Computerprogramm nach Anspruch 7 geladen ist.
